# EUROPÄISCHE PATENTSCHRIFT

(11) **EP 1 015 779 B1**
(45) Veröffentlichungstag und Bekanntmachung des Hinweises auf die Patenterteilung: **20.06.2001**
(21) Anmeldenummer: 98954281.6
(22) Anmeldetag: 21.09.1998
(51) Int. Cl.: F16C 23/08

(54) **PENDELROLLENLAGER**
SELF-ALIGNING ROLLER BEARING
ROULEMENT A ROTULE SUR ROULEAUX

(30) Priorität: 22.09.1997 DE 19741803; 26.09.1997 DE 19742570
(43) Veröffentlichungstag der Anmeldung: 05.07.2000
(73) Patentinhaber: FAG OEM und Handel AG, 97421 Schweinfurt (DE)
(72) Erfinder: BRAND, Armin, D-97688 Bad Kissingen (DE); GANSS, Werner, D-97424 Schweinfurt (DE); GREHN, Martin, D-97456 Dittelbrunn (DE); WEIGAND, Michael, D-97725 Elfershausen (DE)
(74) Vertreter: Gesthuysen, Hans Dieter, Dipl.-Ing.
(86) Internationale Anmeldenummer: EP9806017
(87) Internationale Veröffentlichungsnummer: WO9915801

(56) Entgegenhaltungen:
- DE-A- 3 809 906
- DE-C- 644 181
- US-A- 1 498 571
- US-A- 2 740 675
- US-A- 4 530 610
- US-A- 5 009 524
- US-A- 5 586 826

## Beschreibung

Die Erfindung betrifft ein Pendelrollenlager mit zwei Rollenreihen mit symmetrischen Rollen, mit einem Außenring mit einer gekrümmten Außenlaufbahn, mit einem Innenring mit zwei gekrümmten Innenlaufbahnen und mit einem zwischen den Rollen vorgesehenen, als Kreisringscheibe ausgebildeten Führungsring.

Wälzlager, die zur Übertragung radialer und/oder axialer Lasten an rotierenden Teilen dienen, werden nach der Form ihrer Wälzkörper in Kugellager einerseits und Rollenlager andererseits unterteilt. Bei Rollenlagern unterscheidet man wiederum zwischen Zylinder-, Tonnen-, Nadel-, Kegel- und Pendelrollenlagern. Pendelrollenlager enthalten zwei Rollenreihen mit tonnenförmigen Rollen, deren Rollenachsen gegen die Lagerachse geneigt sind. Die Außenlaufbahn ist hohlkugelig, so daß sich die Rollen bei Fluchtungsfehlern und bei einer Durchbiegung der zugeordneten Welle in der Außenringlaufbahn pendelnd einstellen können. Das Profil der Laufbahnen ist dem Profil der Rollen meist recht eng angepaßt. Die unterschiedlichen Ausführungen von Pendelrollenlagern unterscheiden sich sowohl in der Größe selbst als auch in der Größe und der Form der Rollen. So gibt es sowohl Ausführungsformen mit symmetrischen Rollen als auch solche mit unsymmetrischen Rollen. Außerdem gibt es Ausführungsformen mit und ohne Borde.

Seit über einem halben Jahrhundert werden Pendelrollenlager verwendet. Sie haben sich wegen ihrer hohen Tragfähigkeit bewährt und werden überall dort eingesetzt, wo hohe stoßartige Kräfte aufzunehmen sind und mit Fluchtfehlern und größeren Durchbiegungen der zugeordneten Welle gerechnet werden muß. Hauptanwendungsgebiete sind schwere Lauf- und Stützrollen. Schiffslaufwellen und Ruderschäfte, Steinbrecher, Kurbelwellen, Getriebe, Schwingsiebe, Walzwerke, Mahl- und Zerkleinerungswerke. Wegen der zahlreichen Anwendungsgebiete ist während der jahrzehntelangen Verwendung von Pendelrollenlagern immer wieder versucht, worden, durch konstruktive Änderungen die Tragfähigkeit weiter zu erhöhen und die Herstellungskosten zu verringern. So hat es Versuche gegeben, die Führung der Rollen statt mit einem fest mit dem Innenring verbundenen Mittelbord mit einem losen Führungsring zu realisieren oder gänzlich auf besondere Führungen zu verzichten, wobei dann die Führung der Rollen lediglich durch einen Käfig realisiert ist. Normalerweise hat ein solcher Käfig die Aufgabe, die einzelnen Rollen einer Rollenreihe in gleichmäßigem Abstand zueinander zu halten und somit ihre gegenseitige Berührung zu verhindern. Bei einem Pendelrollenlager bewegen sich jedoch unter Last die Rollen der beiden Rollenreihen aufeinander zu, so daß es dann zu einem Verschleiß des Käfigs kommt, wenn die Führung der Rollen nicht zusätzlich durch einen Mittelbord oder einen Führungsring übernommen wird.

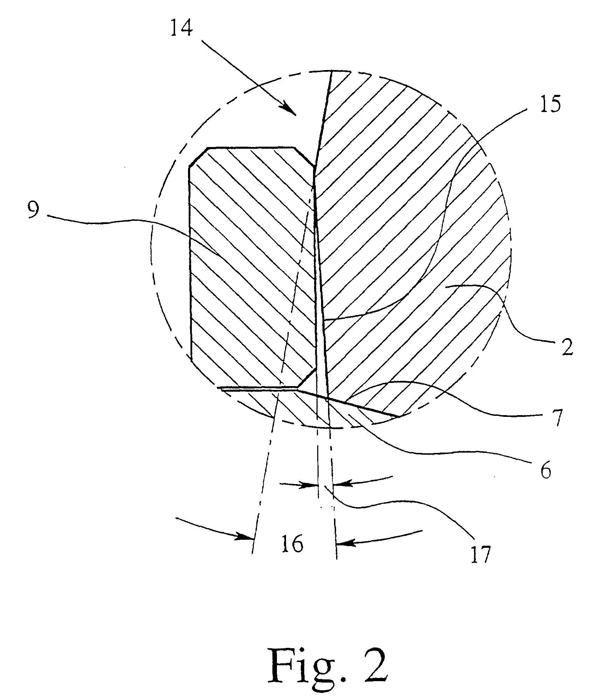

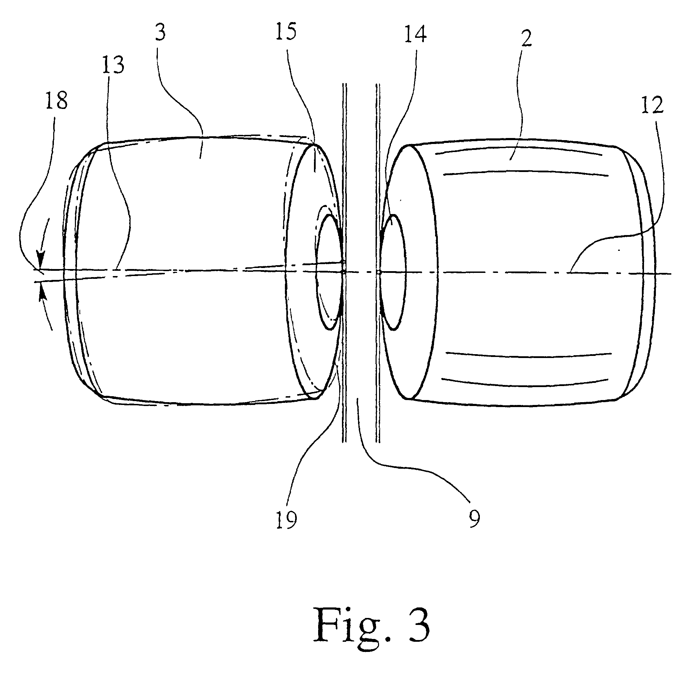

Immer dann, wenn bei einem Pendelrollenlager ein fester Mittelbord oder ein loser Führungsring verwendet wird, hat im Stand der Technik dieser Mittelbord bzw. dieser Führungsring einen trapezförmigen Querschnitt. So ist aus der bereits 1937 veröffentlichten deutschen Patentschrift 644 181, Fig. 2 und 3, ein Pendelrollenlager bekannt, bei dem ein loser Führungsring zur Führung der Rollen verwendet wird. Hierbei ist die Breite des trapezförmigen Führungsringes so groß. daß die Rollen nach den Seiten des Pendelrollenlagers hin gedrückt werden. Auch aus der bereits 1956 veröffentlichten USA-Patentschrift 2,740,675 ist ein Pendelrollenlager bekannt, bei dem zwischen den Rollen der beiden Rollenreihen ein lose auf dem Innenring angeordneter trapezförmiger Führungsring vorgesehen ist. Um ein optimales Reibverhalten bei unterschiedlichen Radiallasten zu erhalten, soll die Breite des Führungsringes genau dem Abstand zwischen den Rollen der beiden Rollenreihen entsprechen. Sowohl bei dem Pendelrollenlager nach der deutschen Patentschrift 644 181 als auch bei dem Pendelrollenlager nach der USA-Patentschrift 2,740,675 hat der Führungsring die Aufgabe, einerseits den Abstand zwischen den Rollen der beiden Rollenreihen sicherzustellen, andererseits ein Schränken der Rollen zu verhindern. Auch aus der gerade erst erschienenen USA-Patentschrift 5,586,826 ist ein Pendelrollenlager mit einem trapezförmigen Führungsring bekannt. Hier soll eine Verringerung der Reibung durch eine besondere Ausgestaltung der Rollen erreicht werden.

Der Erfindung liegt nun die Aufgabe zugrunde, ein Pendelrollenlager mit hoher Tragfähigkeit zur Verfügung zu stellen, das einerseits einfach und damit kostengünstig hergestellt werden kann, andererseits auch bei hoher Belastung nur eine geringe Reibung aufweist, so daß hohe Drehzahlen möglich sind und eine lange Lebensdauer gewährleistet ist.

Das erfindungsgemäße Pendelrollenlager, bei dem die zuvor aufgezeigte Aufgabe gelöst ist, ist nun zunächst und im wesentlichen dadurch gekennzeichnet, daß der Führungsring einen rechteckigen Querschnitt hat und die Querschnittmittellinie des Führungsringes parallel zur Lagerachse verläuft. Der Vorteil eines Führungsringes mit einem rechteckigen Querschnitt ist gegenüber einem trapezförmig ausgebildeten Führungsring zunächst darin zu sehen, daß ein solcher Führungsring besonders einfach und folglich günstig hergestellt werden kann. Vor allem aber ist der erreichte Vorteil darin zu sehen, daß stets ein gleichbleibender Abstand zwischen den Rollen der beiden Rollenreihen gewährleistet ist.

In Verbindung mit der zuvor beschriebenen Maßnahme kommt einer vorteilhaften Ausgestaltung des erfindungsgemäßen Pendelrollenlagers besondere Bedeutung zu, die dadurch gekennzeichnet ist, daß der Führungsring so dimensioniert ist, daß die Rollen axial vorgespannt sind. Es wird also durch den Führungsring auf die Rollen eine Kraft unter einem spitzen Winkel zu den Rollenachsen ausgeübt, wodurch eine Verschiebung der Berührungspunkte zwischen den Rollen sowie der Außenlaufbahn und den Innenlaufbahnen bewirkt wird; es werden also die Druckellipsen zwischen den Innenlaufbahnen und den Rollen zu den Stirnseiten des erfindungsgemäßen Pendelrollenlagers verschoben. Ohne eine solche Vorspannung berühren die Rollen die Außenlaufbahn und die Innenlaufbahnen an der Stelle ihres größten Durchmessers, so daß die Kraftwirkungslinien Innenring bzw. Innenlaufbahnen - Rollen und Rollen - Außenring bzw. Außenlaufbahn ein Schränken der Rollen bewirken. Durch die Verschiebung der Berührungspunkte, die durch die vorgesehene Vorspannung bewirkt wird, stehen die Kraftwirkungslinien Innenring bzw. Innenlaufbahnen - Rollen und Rollen - Außenring bzw. Außenlaufbahn unter einem Winkel, wodurch ein Schränken der Rollen verringert wird.

Bei dem erfindungsgemäßen Pendelrollenlager ist vorzugsweise der Führungsring, wie an sich bekannt. als loser Führungsring ausgebildet. Der Führungsring ist also zwar auf dem Innenring geführt, jedoch nicht mit diesem verbunden. Hierdurch kann auch bei Bedarf ohne weiteres für den Führungsring ein anderes Material als für den Innenring verwendet werden. Vor allem aber hat ein loser Führungsring den Vorteil. daß die Umfangskomponenten der Führungsringgeschwindigkeit durch das Mitdrehen des Führungsringes ausgeglichen wird, d. h. gegen Null geht.

Besonders vorteilhaft ist es, wenn bei dem erfindungsgemäßen Pendelrollenlager die dem Führungsring zugewandten Stirnseiten der Rollen so ausgeführt sind, daß zwischen den Stirnseiten der Rollen und dem Führungsring nur eine punktförmige Berührung vorliegt, wobei vorzugsweise der Abstand zwischen den Rollenachsen und den punktförmigen Berührungen der Stirnseiten der Rollen mit dem Führungsring etwa 50 % bis 75 % des maximalen Rollendurchmessers beträgt. Die Maßnahme, die dem Führungsring zugewandten Stirnseiten der Rollen so auszuführen, daß zwischen den Stirnseiten der Rollen und dem Führungsring nur eine punktförmige Berührung vorliegt, läßt sich im einzelnen unterschiedlich realisieren, nämlich entweder dadurch, daß die dem Führungsring zugewandten Stirnseiten der Rollen konvex gekrümmt sind, oder dadurch, daß die Rollen an den dem Führungsring zugewandten Stirnseiten mit einer Fase versehen sind.

Durch die zuvor beschriebenen Maßnahmen ist sichergestellt, daß es auch bei einem zulässigen Schränken der Rollen nicht zu einer Berührung der Kanten der Stirnflächen der Rollen mit dem Führungsring kommt, so daß ein "Fressen" an den Kanten der Stirnflächen der Rollen ausgeschlossen ist.

Im einzelnen gibt es nun eine Vielzahl von Möglichkeiten, das erfindungsgemäße Pendelrollenlager auszugestalten. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen
- Fig. 1: eine schematische Darstellung einer Hälfte eines erfindungsgemäßen Pendelrollenlagers im Axialschnitt gesehen,
- Fig. 2: einen vergrößerten Ausschnitt des Überganges zwischen einer Rolle und dem Führungsring aus dem Pendelrollenlager gemäß Fig. 1 und
- Fig. 3: in einer Draufsicht, eine schematische Darstellung der Berührung zwischen den Rollen und dem Führungsring bei dem Pendelrollenlager nach Fig. 1

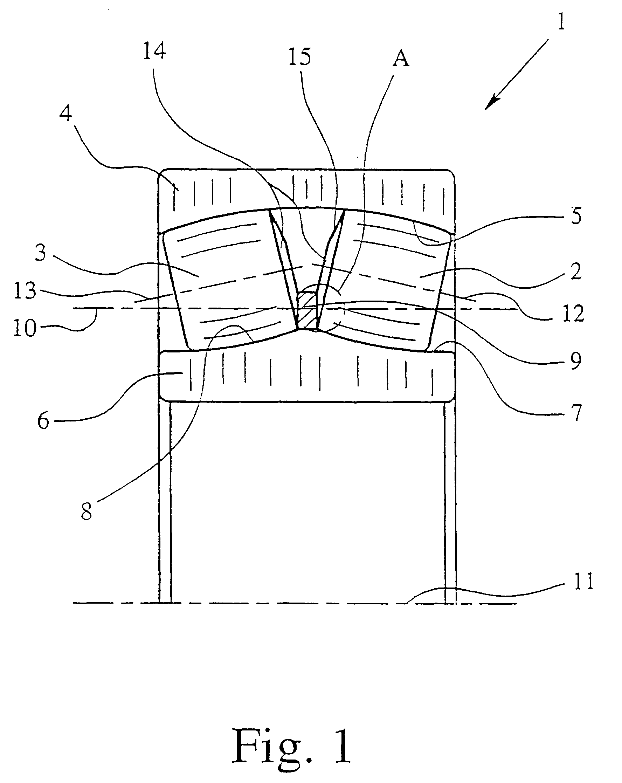

Fig. 1 zeigt eine Hälfte eines Pendelrollenlagers 1 im Axialschnitt. Das Pendelrollenlager 1 besteht aus zwei Rollenreihen mit symmetrischen Rollen 2, 3, die zwischen einem Außenring 4 mit einer gekrümmten Außenlaufbahn 5 und einem Innenring 6 mit zwei gekrümmten Innenlaufbahnen 7, 8 vorgesehen sind. Zwischen den beiden Rollen 2 bzw. 3 der beiden Rollenreihen befindet sich ein Führungsring 9, der als Kreisringscheibe ausgebildet ist und einen rechteckigen Querschnitt hat. Die Querschnittsmittellinie 10 des Führungsringes 9 verläuft parallel zur Lagerachse 11. Demgegenüber verlaufen die Rollenachsen 12, 13 der Rollen 2 bzw. 3 unter einem Winkel zur Lagerachse 11. Dieser Winkel wird als Lagerdruckwinkel bezeichnet und hat bei Pendelrollenlagern typischerweise einen Wert zwischen 4° und 18°.

Im Ausführungsbeispiel ist der Führungsring 9 so dimensioniert, daß die Rollen 2, 3 axial vorgespannt sind. Es wird also durch den Führungsring 9 auf die Rollen 2, 3 eine Kraft unter einem spitzen Winkel zu den Rollenachsen 12, 13 ausgeübt. Dadurch wird eine Verschiebung der Berührungspunkte zwischen den Rollen 2, 3 sowie der Außenlaufbahn 5 und den Innenlaufbahnen 6, 7 bewirkt; es werden also die Druckellipsen zwischen den Innenlaufbahnen 6, 7 und den Rollen 2, 3 zu den Stirnseiten des erfindungsgemäßen Pendelrollenlagers 1 verschoben. Durch die Verschiebung der Berührungspunkte bzw. der Druckellipsen stehen die Kraftwirkungslinien Außenring 4 bzw. Außenlaufbahn 5 - Rollen 2, 3 und Rollen 2, 3 - Innenring 6 bzw. Innenlaufbahnen 7, 8 unter einem Winkel, wodurch ein Schränken der Rollen 2, 3 verringert wird.

Im dargestellten Ausführungsbeispiel ist des weiteren der Führungsring 9 lose ausgebildet, d. h. er wird zwar auf dem Innenring 6 geführt, kann sich jedoch senkrecht zur Lagerachse 11 in Richtung auf den Außenring 4 bewegen. Dadurch, daß der Führungsring 9 lose ausgeführt ist, kann bei Bedarf ohne weiteres für den Führungsring 9 ein anderes Material als für den Innenring 6 verwendet werden. Vor allem aber hat der lose Führungsring 9 den Vorteil, daß die Umfangskomponenten der Führungsringgeschwindigkeit durch das Mitdrehen des Führungsringes 9 ausgeglichen wird, d. h. gegen Null geht.

Von ganz besonderer Bedeutung ist eine im Ausführungsbeispiel verwirklichte weitere Maßnahme, nämlich die, daß die dem Führungsring 9 zugewandten Stirnseiten 14 der Rollen 2, 3 so ausgeführt sind, daß zwischen den Stirnseiten 14 der Rollen 2, 3 und dem Führungsring 9 nur eine punktförmige Berührung vorliegt. Vorzugsweise beträgt dabei der Abstand zwischen den Rollenachsen 12, 13 und den punktförmigen Berührungen der Stirnseiten 14 der Rollen 2, 3 mit dem Führungsring 9 etwa 50 % bis 75 % des maximalen Rollendurchmessers.

Die Maßnahme, die dem Führungsring 9 zugewandten Stirnseiten 14 der Rollen 2, 3 so auszuführen, daß zwischen den Stirnseiten 14 der Rollen 2, 3 und dem Führungsring 9 nur eine punktförmige Berührung vorliegt, läßt sich unterschiedlich realisieren. Eine Möglichkeit besteht darin, die dem Führungsring 9 zugewandten Stirnseiten 14 der Rollen 2, 3 konvex gekrümmt auszuführen. Eine andere Möglichkeit ist im dargestellten Ausführungsbeispiel realisiert; im Ausführungsbeispiel sind nämlich die Rollen 2, 3 an den dem Führungsring 9 zugewandten Stirnseiten 14 mit einer Fase 15 versehen. Dabei ist vorzugsweise der Übergang von den eigentlichen Stirnseiten 14 der Rollen 2, 3 zu der jeweiligen Fase 15 gerundet bzw. gebrochen; dieser Übergang ist also nicht scharfkantig.

Der Fasenwinkel 16, also der Winkel zwischen den eigentlichen Stirnseiten 14 der Rollen 2, 3 und den Fasen 15 ist vorzugsweise etwa 1,5° größer als der sich betriebsmäßig einstellende Lagerdruckwinkel. Daraus ergibt sich, wie in Fig. 2 dargestellt, daß zwischen den Rollen 2, 3 und dem Führungsring 9 - genauer zwischen den Stirnseiten 14 der Rollen 2, 3 und dem Führungsring 9 - stets ein Öffnungswinkel 17 vorhanden ist, der sich als Differenz aus dem Fasenwinkel 16 und dem Lagerdruckwinkel ergibt. Durch den Öffnungswinkel 17 ist sichergestellt, daß zwischen den Stirnseiten 14 der Rollen 2, 3 und dem Führungsring 9 im Stillstand stets nur eine punktförmige, betriebsmäßig, wenn also betriebsmäßig Relativbewegungen auftreten, stets nur eine linienförmige Berührung auftritt. Darüber hinaus kann der durch den Öffnungswinkel 17 beschriebene Spalt zwischen dem Führungsring 9 und den Rollen 2, 3 zum Aufbau und Erhalt eines Schmierfilms benutzt werden.

In Fig. 3 ist die Berührungssituation zwischen den Stirnseiten 14 der Rollen 2, 3 und dem Führungsring 9 in einer Draufsicht dargestellt. Auch bei einem Schränken der Rollen 2, 3 um einen Schränkungswinkel 18 kommt es nicht zu einer Berührung der Kanten 19 der Stirnseiten 14 der Rollen 2, 3 mit dem Führungsring 9, so daß ein Fressen an den Kanten 19 der Stirnseiten 14 der Rollen 2, 3 ausgeschlossen ist. Dies ist durch die gestrichelt eingezeichnete Position der Rolle 3 in Fig. 3 dargestellt. Durch das Schränken der Rolle 3 um den Schränkungswinkel 18 wandert der Mittelpunkt der Stirnfläche 14 der Rolle 3 nur um einen kleines Stück aus seiner Ursprungslage heraus, wodurch das Laufverhalten des Pendelrollenlagers 1 jedoch nicht merklich beeinflußt wird. Insbesondere kommt es nicht zu einer Berührung der Kante 19 der Rolle 3 mit dem Führungsring 9. Dadurch kommt es nicht zu einer Zerstörung der Rolle 3, wodurch die Lebensdauer des Pendelrollenlagers 1 insgesamt erhöht wird.

Von besonderer Bedeutung für das erfindungsgemäße Pendelrollenlager 1 ist die gemeinsame Verwirklichung der folgenden Maßnahmen:
a) Führungsring 9 mit einem rechteckigen Querschnitt.
b) Dimensionierung des Führungsringes 9 so, daß die Rollen 2, 3 axial vorgespannt sind.
c) Ausführung der dem Führungsring 9 zugewandten Stirnseiten 14 der Rollen 2, 3 so, daß zwischen den Stirnseiten 14 der Rollen 2, 3 und dem Führungsring 9 nur eine punktförmige Berührung vorliegt.

Versuche haben gezeigt, daß bei der gemeinsamen Realisierung der zuvor aufgezeigten Maßnahmen die bei dem erfindungsgemäßen Pendelrollenlager 1 auftretende Reibung etwa 30 % bis sogar 50 % geringer ist als die bei vergleichbaren bekannten Pendelrollenlagern auftretende Reibung.

## Patentansprüche

1. Pendelrollenlager mit zwei Rollenreihen mit symmetrischen Rollen (2,3), mit einem Außenring (4) mit einer gekrümmten Außenlaufbahn (5), mit einem Innenring (6) mit zwei gekrümmten Innenlaufbahnen (7, 8) und mit einem zwischen den Rollen (2, 3) vorgesehenen, als Kreisringscheibe ausgebildeten Führungsring (9), **dadurch gekennzeichnet,** daß der Führungsring (9) einen rechteckigen Querschnitt hat und die Querschnittsmittellinie (10) des Führungsringes (9) parallel zur Lagerachse (11) verläuft.

2. Pendelrollenlager nach Anspruch 1, dadurch gekennzeichnet, daß der Führungsring (9) so dimensioniert ist, daß die Rollen (2, 3) axial vorgespannt sind.

3. Pendelrollenlager nach Anspruch 1 oder 2, dadurch gekennzeichnet, daß der Führungsring (9) lose ausgebildet ist, - also nicht mit dem Innenring (6) verbunden ist.

4. Pendelrollenlager nach einem der Ansprüche 1 bis 3, dadurch gekennzeichnet, daß die dem Führungsring (9) zugewandten Stirnseiten (14) der Rollen (2, 3) so ausgeführt sind, daß zwischen den Stirnseiten (14) der Rollen (2, 3) und dem Führungsring (9) nur eine punktförmige Berührung vorliegt.

5. Pendelrollenlager nach Anspruch 4, dadurch gekennzeichnet, daß die punktförmige Berührung zwischen den dem Führungsring (9) zugewandten Stirnseiten (14) der Rollen (2, 3) und dem Führungsring (9) in einem Abstand von etwa 50 % bis 75 % des maximalen Rollendurchmessers von den Rollenachsen (12, 13) liegt.

6. Pendelrollenlager nach Anspruch 4 oder 5, dadurch gekennzeichnet, daß die dem Führungsring (9) zugewandten Stirnseiten (14) der Rollen (2, 3) konvex gekrümmt sind.

7. Pendelrollenlager nach Anspruch 4 oder 5, dadurch gekennzeichnet, daß die Rollen (2, 3) an den dem Führungsring (9) zugewandten Stirnseiten (14) mit einer Fase (15) versehen sind.

8. Pendelrollenlager nach Anspruch 7, dadurch gekennzeichnet. daß der Fasenwinkel (16) der Fase (15) von dem Lagerdruckwinkel abweicht.

9. Pendelrollenlager nach Anspruch 8, dadurch gekennzeichnet, daß der Fasenwinkel (16) der Fase (15) um 0, 3° bis 5° größer ist als der sich betriebsmäßig einstellende Lagerdruckwinkel.

10. Pendelrollenlager nach Anspruch 9, dadurch gekennzeichnet, daß der Fasenwinkel (16) der Fase (15) um etwa 1,5° größer ist als der sich betriebsmäßig einstellende Lagerdruckwinkel.

## Claims

1. Self-aligning roller bearing with two rows of symmetrical rollers (2, 3), with an outer ring (4) having a curved outer track (5), with an inner ring (6) having two curved inner tracks (7, 8), and with a guide ring (9) which is provided between the rollers (2, 3) and which is made as a circular ring disk, **characterized in** that the guide ring (9) has a rectangular cross section and the cross sectional center line (10) of the guide ring (9) runs parallel to the bearing axis (11).

2. Self-aligning roller bearing as claimed in claim 1, wherein the guide ring (9) is dimensioned such that the rollers (2, 3) are axially prestressed.

3. Self-aligning roller bearing as claimed in claim 1 or 2, wherein the guide ring (9) is made loose, - i.e. is not joined to the inner ring (6).

4. Self-aligning roller bearing as claimed in one of claims 1 to 3, wherein the end faces (14) of the rollers (2, 3) and the guide ring (9) are made such that there is only one point of contact between the end faces (14) of the rollers (2, 3) and the guide ring (9).

5. Self-aligning roller bearing as claimed in claim 4, wherein the point contact between the end faces (14) of the rollers (2, 3) facing the guide ring (9) and the guide ring is at a distance of roughly 50 % to 75 % of the maximum roller diameter from the roller axes (12, 13).

6. Self-aligning roller bearing as claimed in claim 4 or 5, wherein the end faces (14) of the rollers (2, 3) facing the guide ring (9) are convexly curved.

7. Self-aligning roller bearing as claimed in claim 4 or 5, wherein the rollers (2, 3) on the end faces (14) which face the guide ring (9) are provided with a bezel (15).

8. Self-aligning roller bearing as claimed in claim 7, wherein the angle (16) of the bezel (15) differs from the bearing pressure angle.

9. Self-aligning roller bearing as claimed in claim 8, wherein the angle (16) of the bezel (15) is 0.3° to 5° greater than the bearing pressure angle which is set in operation.

10. Self-aligning roller bearing as claimed in claim 9, wherein the angle (16) of the bezel (15) is roughly 1.5° greater than the bearing pressure angle which is set in operation.

## Revendications

1. Roulement à rotule sur rouleaux, ayant deux rangées de rouleaux avec des rouleaux symétriques (2, 3), ayant une bague externe (4) avec une trajectoire externe curviligne (5), ayant une bague interne (6) avec deux trajectoires internes curvilignes (7, 8) et ayant une bague de guidage (9) formée en tant que disque annulaire circulaire, prévue entre les rouleaux (2, 3), caractérisé en ce que la bague de guidage (9) possède une section rectangulaire et la ligne du centre de la section (10) de la bague de guidage (9) se prolonge parallèlement à l'axe du roulement (11).

2. Roulement à rotule sur rouleaux selon la revendication 1, caractérisé en ce que la bague de guidage (9) est dimensionnée de sorte que les rouleaux (2, 3) soient axialement précontraints.

3. Roulement à rotule sur rouleaux selon la revendication 1 ou 2, caractérisé en ce que la bague de guidage (9) est formée de façon lâche, à savoir elle n'est pas liée à la bague intérieure (6).

4. Roulement à rotule sur rouleaux selon l'une quelconque des revendications 1 à 3, caractérisé en ce que les faces frontales (14) des rouleaux (2, 3) tournées vers la bague de guidage (9) sont réalisées de telle façon qu'il n'existe qu'un contact ponctuel entre les faces frontales (14) des rouleaux (2, 3) et la bague de guidage (9).

5. Roulement à rotule sur rouleaux selon la revendication 4, caractériaé en ce que le contact ponctuel entre les faces frontales (14) des rouleaux (2, 3) tournées vers la bague de guidage (9) et la bague de guidage (9), se trouve à une distance des axes des rouleaux (12, 13) d'environ 50 % à 75 % du diamètre maximum des rouleaux.

6. Roulement à rotule sur rouleaux selon la revendication 4 ou 5, caractérisé en ce que les faces frontales (14) des rouleaux (2, 3) tournées vers la bague de guidage (9) sont bombées de façon convexe.

7. Roulement à rotule sur rouleaux selon la revendication 4 ou 5, caractérisé en ce que les rouleaux (2, 3) sont pourvus d'un biseau (15) au niveau des faces frontales (14) tournées vers la bague de guidage (9).

8. Roulement à rotule sur rouleaux selon la revendication 7, caractérisé en ce que l'angle de biseau (16) du biseau (15) diffère de l'angle de pression du roulement.

9. Roulement à rotule sur rouleaux selon la revendication 8, caractérisé en ce que l'angle de biseau (16) du biseau (15) est supérieur de 0,3 à 5° à l'angle de pression de roulement qui s'ajuste de façon appropriée pendant le fonctionnement.

10. Roulement à rotule sur rouleaux selon la revendication 9, caractérisé en ce que l'angle de biseau (16) du biseau (15) est supérieur d'environ 1,5° à l'angle de pression de roulement qui s'ajuste de façon appropriée pendant le fonctionnement.
